# EUROPEAN PATENT APPLICATION

(11) **EP 4 782 985 A1**
(43) Date of publication of application: **29.07.2026**
(21) Application number: 23878380.7
(22) Date of filing: 19.09.2023
(51) Int. Cl.: G06F 3/16, G10L 13/02

(54) **NOTIFICATION SYSTEM, NOTIFICATION METHOD, SERVER DEVICE, AND EQUIPMENT**

(71) Applicant: Panasonic Intellectual Property Management Co., Ltd., Kadoma-shi, Osaka 571-0057 (JP)
(72) Inventor: IKEUCHI, Hiromu, Kadoma-shi, Osaka 571-0057 (JP); ISHII, Masahiro, Kadoma-shi, Osaka 571-0057 (JP); ASAI, Sara, Kadoma-shi, Osaka 571-0057 (JP)
(74) Representative: Novagraaf International SA
(86) International application number: PCT/JP2023/033927
(87) International publication number: WO 2025/062490

(57) **Abstract**

A notification system (2) includes a speech device (8) which is operated by a user (12) and a server device (6) which communicates with the speech device (8) via a network (10). The server device (6) includes a communicator (18) which transmits sound source data to the speech device (8). The speech device (8) includes a communicator (30) which receives the sound source data from the server device (6) and a reproducer (36) which reproduces the sound source data received by the communicator (30). When the reproducer (36) of the speech device (8) has not reproduced the sound source data for a predetermined period, the reproducer (36) reproduces specific sound source data for notifying the user (12) of predetermined information with an operation of the speech device (8) performed by the user (12) or an approach to the speech device (8) made by the user (12) as a trigger.

## Description

### [Technical Field]

The present disclosure relates to notification systems, notification methods, server devices, and devices.

### [Background Art]

A speech device is known which has a speech function of emitting a voice by reproducing sound source data (see, for example, Patent Literature (PTL) 1). Each time an event occurs in an information source device, this type of speech device downloads sound source data from a server device to notify a user of occurrence of the event, and reproduces the downloaded sound source data. In this way, the user recognizes the occurrence of the event in the information source device.

### [Citation List]

### [Patent Literature]

[PTL 1] Japanese Unexamined Patent Application Publication No. 2008-46424

### [Summary of Invention]

### [Technical Problem]

The present disclosure provides a notification system, a notification method, a server device, and a device which allow a user to notice that the device is in a state where the device cannot reproduce sound source data.

### [Solution to Problem]

A notification system according to the present disclosure includes: a device that is operated by a user; and a server device that communicates with the device via a network, the server device includes a first communicator that transmits sound source data to the device, the device includes: a second communicator that receives the sound source data from the server device; and a reproducer that reproduces the sound source data received by the second communicator, and when the reproducer of the device has not reproduced the sound source data for a predetermined period, the reproducer reproduces specific sound source data for notifying the user of predetermined information with an operation of the device performed by the user or an approach to the device made by the user as a trigger.

### [Advantageous Effects of Invention]

A notification system or the like according to the present disclosure allows a user to notice that a device is in a state where the device cannot reproduce sound source data.

### [Brief Description of Drawings]

[FIG. 1]

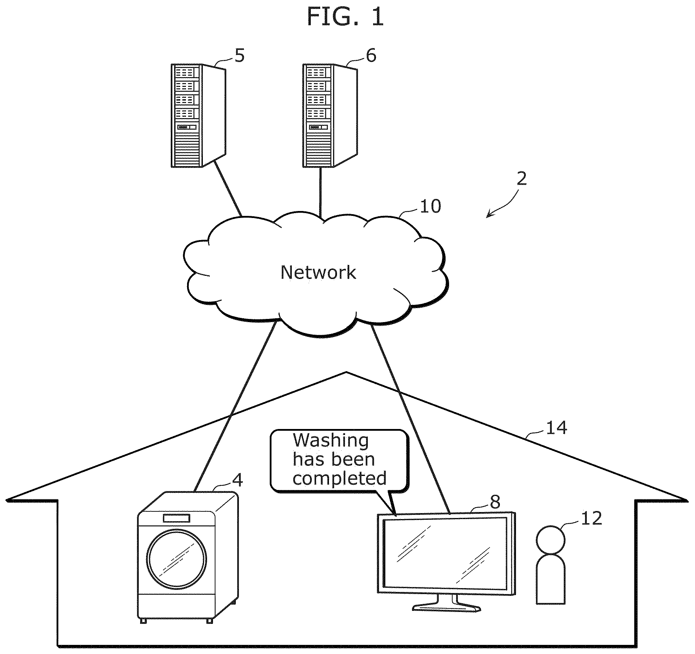

   FIG. 1 is a conceptual diagram showing an outline of a notification system according to an embodiment.
[FIG. 2]

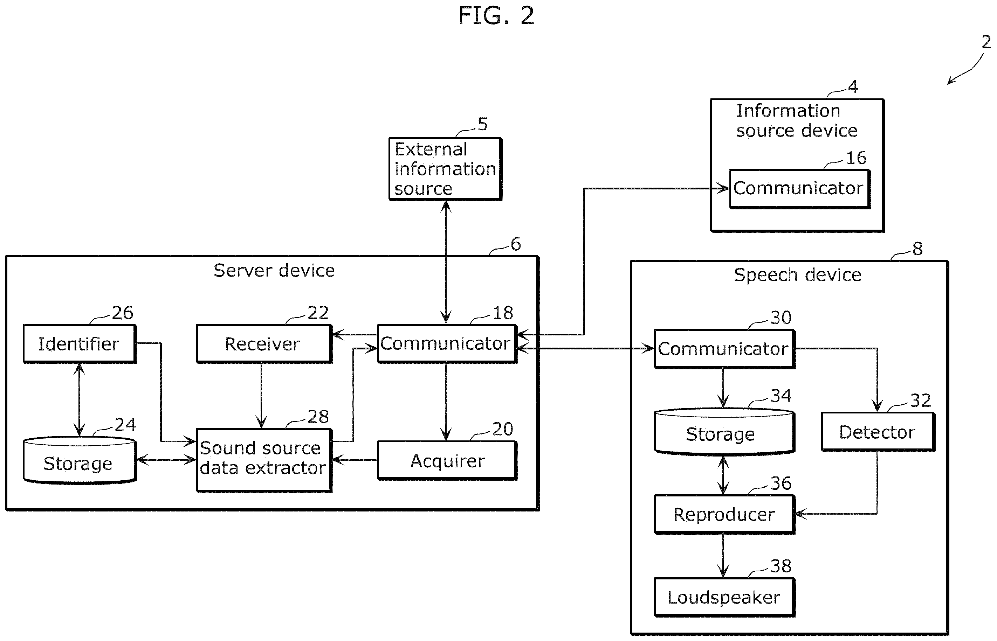

   FIG. 2 is a block diagram showing the functional configuration of the notification system according to the embodiment.
[FIG. 3]

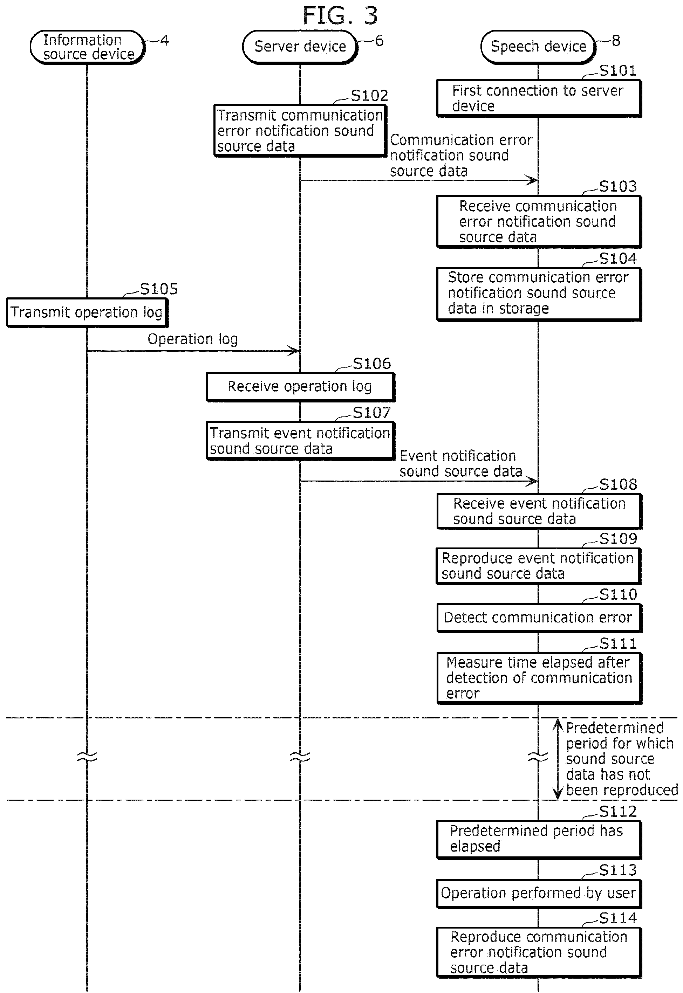

   FIG. 3 is a sequence diagram showing the flow of the first operation of the notification system according to the embodiment.
[FIG. 4]

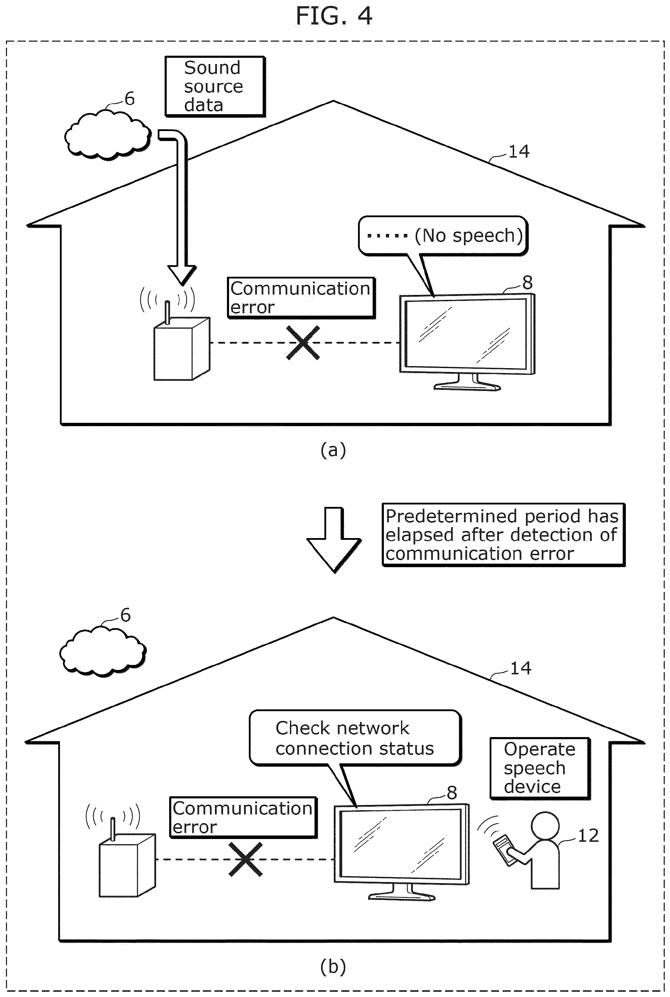

   FIG. 4 is a conceptual diagram for illustrating the first operation of the notification system according to the embodiment.
[FIG. 5]

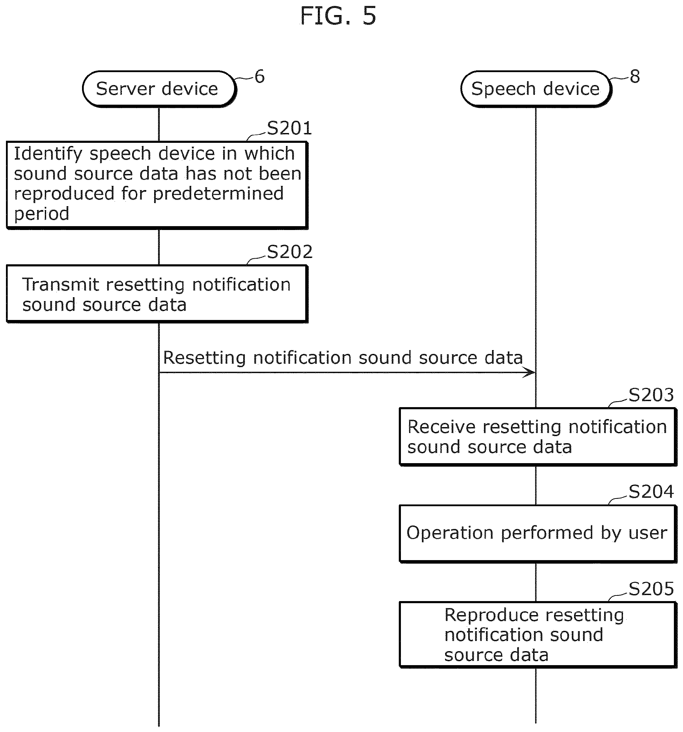

   FIG. 5 is a sequence diagram showing the flow of the second operation of the notification system according to the embodiment.
[FIG. 6]

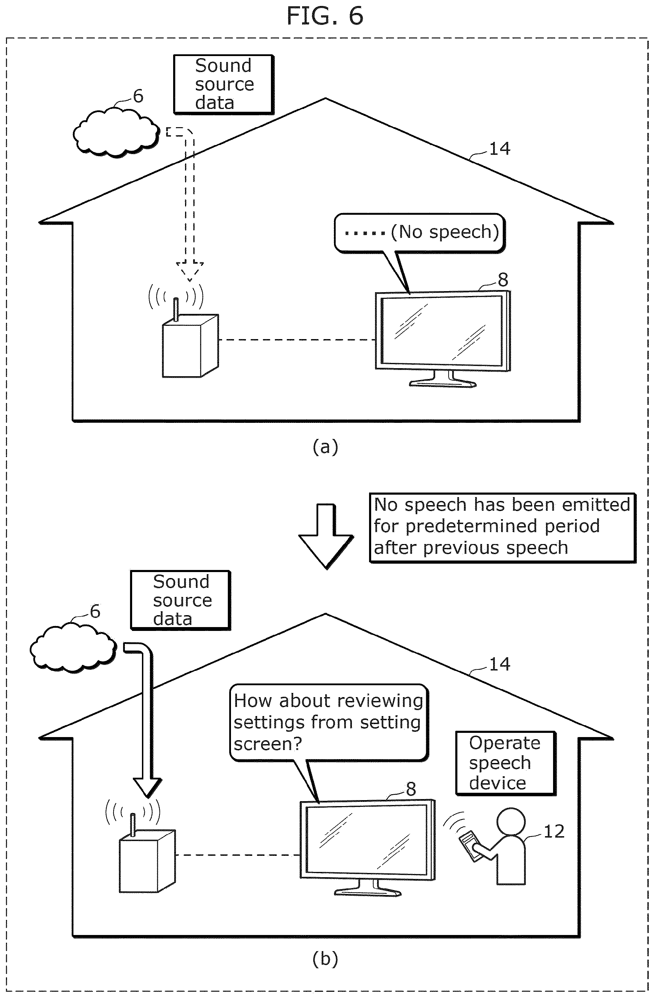

   FIG. 6 is a conceptual diagram for illustrating the second operation of the notification system according to the embodiment.

### [Description of Embodiments]

### (Underlying Knowledge Forming Basis of the Present Disclosure)

The present inventors have found that the following issue occurs in the conventional technique described in "Background Art".

In the conventional technique described above, when a speech device is brought into a state where the speech device cannot reproduce sound source data for some reason but the function of the main body of the speech device can be utilized as it is, it is disadvantageous that a user does not notice that the speech device is in the state where the speech device cannot reproduce sound source data.

Hence, the present inventors have conducted thorough study to devise a notification system, a notification method, a server device, and a device which allow a user to notice that the device is in a state where the device cannot reproduce sound source data.

An embodiment will be described in detail below with reference to drawings as necessary. However, a detailed description beyond necessity may be omitted. For example, a detailed description of an already well known matter or a repeated description of substantially the same configuration may be omitted. This is intended for preventing the following description from being unnecessarily redundant and facilitating the understanding of a person skilled in the art.

The present inventors provide accompanying drawings and the following description so that the person skilled in the art fully understands the present disclosure, and they do not intend to limit features recited in the scope of claims.

### (Embodiment)

An embodiment will be described below with reference to FIGS. 1 to 6.

### [1. Outline of notification system]

An outline of notification system 2 according to the embodiment will first be described with reference to FIG. 1. FIG. 1 is a conceptual diagram showing the outline of notification system 2 according to the embodiment.

As shown in FIG. 1, notification system 2 includes information source device 4, external information source 5, server device 6, and speech device 8 (an example of a device). Information source device 4, external information source 5, server device 6, and speech device 8 described above can communicate with each other via network 10. Network 10 is, for example, the internet. Information source device 4 and speech device 8 are installed, for example, in home 14 of user 12.

Information source device 4 is a home appliance operated by user 12, and is, for example, a washing machine. Each time an event (for example, "completion of washing") occurs in information source device 4, information source device 4 transmits an operation log indicating the event to server device 6. Although in the present embodiment, a case where information source device 4 is a washing machine will be described, the present disclosure is not limited to this case, and examples of information source device 4 may include any home appliances such as a television receiver, an air conditioner, a microwave oven, a refrigerator, a rice cooker, an autonomous robot vacuum cleaner, and an air purifier.

External information source 5 is an information source (such as a server) which provides information about services that are not directly related to speech device 8, such as weather information and delivery information for a parcel delivery service.

Server device 6 is a could server for controlling details of a speech provided by speech device 8. When server device 6 receives the operation log from information source device 4, server device 6 transmits, to speech device 8, sound source data for the details of a speech (for example, "washing has been completed") corresponding to the operation log. Server device 6 may set the details of a speech provided by speech device 8 based on information acquired from external information source 5.

Speech device 8 is a home appliance which is operated by user 12 and includes loudspeaker 38 (see FIG. 2 which will be described later). Specifically, speech device 8 is a home appliance which has a speech function of emitting a voice from loudspeaker 38, and is, for example, a stationary, wall-mounted, or portable television receiver. Each time speech device 8 receives sound source data from server device 6, speech device 8 reproduces the received sound source data to emit a voice (for example, a voice in which details of a speed are "washing has been completed"). In this way, user 12 can recognize an event which occurs in information source device 4. Although in the present embodiment, a case where speech device 8 is a television receiver will be described, the present disclosure is not limited to this case, and examples of speech device 8 may include any home appliances incorporating a loudspeaker such as an autonomous robot vacuum cleaner, a ceiling light and an intercom handset (so-called door phone).

### [2. Functional configuration of notification system]

The functional configuration of notification system 2 according to the embodiment will then be described with reference to FIG. 2. FIG. 2 is a block diagram showing the functional configuration of notification system 2 according to the embodiment.

As shown in FIG. 2, information source device 4 includes communicator 16 in the functional configuration. Each time an event occurs in information source device 4, communicator 16 transmits an operation log indicating the event to server device 6.

As shown in FIG. 2, server device 6 includes, in the functional configuration, communicator 18 (an example of a second communicator), acquirer 20, receiver 22, storage 24, identifier 26, and sound source data extractor 28.

Communicator 18 transmits and receives various types of data and the like between information source device 4 and speech device 8. Specifically, communicator 18 receives the operation log from information source device 4. Communicator 18 transmits sound source data extracted by sound source data extractor 28 to speech device 8.

Acquirer 20 acquires the operation log received by communicator 18, and outputs the acquired operation log to sound source data extractor 28.

Receiver 22 receives, via communicator 18, settings (hereinafter referred to as the "reproduction settings") about the reproduction of the sound source data made by user 12, and outputs details of the received reproduction settings to sound source data extractor 28. Here, the "settings about the reproduction of the sound source data" are, for example, contents emitted by speech device 8, timing of emission performed by speech device 8, and the like. For example, user 12 operates speech device 8 or a portable terminal (not shown) such as a smartphone to select "weather report" as contents emitted by speech device 8 and to select "at 8:00 a.m. every day" as timing of emission performed by speech device 8. When user 12 makes the reproduction settings as described above, communicator 18 acquires, for example, sound source data for contents of weather report from external information source 5, and stores the acquired sound source data for the contents of weather report in storage 24. Then, communicator 18 transmits, to speech device 8, the sound source data for the contents of weather report stored in storage 24. In this way, in speech device 8, the sound source data for the contents of weather report is reproduced at 8:00 a.m. every day.

Storage 24 is a memory which stores various types of sound source data. Specifically, for example, storage 24 stores: (a) sound source data for notifying user 12 of an event which occurs in information source device 4 (hereinafter also referred to as the "event notification sound source data"); (b) sound source data for notifying user 12 of contents for which the reproduction settings are made (hereinafter also referred to as the "contents notification sound source data"); (c) sound source data for notifying user 12 of occurrence of a communication error (an example of predetermined information) in communication between server device 6 and speech device 8 (hereinafter also referred to as the "communication error notification sound source data") (an example of specific sound source data); and (d) sound source data for providing a notification which prompts user 12 to review the details of the reproduction settings (an example of the predetermined information) (hereinafter also referred to as the "resetting notification sound source data") (an example of the specific sound source data). The contents notification sound source data is acquired by communicator 18, for example, from external information source 5, and is stored in storage 24.

Storage 24 also stores speech performance information which is generated based on the results of extraction performed by sound source data extractor 28 to be described later and indicates the speech performance (that is, the performance of reproduction of sound source data in speech device 8) of speech device 8.

Identifier 26 references the speech performance information stored in storage 24 to identify, based on the details of the reproduction settings received by receiver 22, speech device 8 in which the sound source data has not been reproduced for a predetermined period (for example, one month). For example, when user 12 does not select any contents to be emitted by speech device 8 in the reproduction settings, speech device 8 does not reproduce the contents notification sound source data. In such a case, identifier 26 identifies speech device 8 in which the contents notification sound source data has not been reproduced for the predetermined period, and adds identified speech device 8 to a candidate list. Identifier 26 may identify, at predetermined intervals (for example, every one hour), speech device 8 in which the sound source data has not been reproduced for the predetermined period. The "based on the details of the reproduction settings received by receiver 22" does not include a case where user 12 intentionally turns off a voice notification in speech device 8.

Sound source data extractor 28 extracts, based on the operation log from acquirer 20, the event notification sound source data corresponding to the operation log from storage 24. For example, when acquirer 20 acquires an operation log indicating an event of "washing completion", sound source data extractor 28 extracts, from storage 24, the event notification sound source data for the details of a speech corresponding to the operation log which are "washing has been completed".

Sound source data extractor 28 extracts, based on the details of the reproduction settings received by receiver 22, the contents notification sound source data corresponding to the reproduction settings from storage 24. For example, when user 12 makes the reproduction settings for selecting "weather report" as the contents to be emitted by speech device 8, sound source data extractor 28 extracts, from storage 24, the contents notification sound source data for the details of a speed about weather report.

When server device 6 and speech device 8 are first connected to each other, sound source data extractor 28 extracts, from storage 24, for example, the communication error notification sound source data for the details of a speed which are "check the network connection status". The "first connected" means that speech device 8 and server device 6 are first connected to each other via network 10 after the installation of speech device 8.

When identifier 26 identifies speech device 8, sound source data extractor 28 extracts, for example, the resetting notification sound source data for the details of a speed which are "how about reviewing the settings from a setting screen?".

As shown in FIG. 2, speech device 8 includes, in the functional configuration, communicator 30 (an example of the second communicator), detector 32, storage 34, reproducer 36, and loudspeaker 38.

Communicator 30 transmits and receives various types of data and the like between server device 6 and communicator 30 via network 10. Specifically, communicator 30 receives the sound source data from server device 6, and stores the received sound source data in storage 34.

Detector 32 monitors the state of communication between server device 6 and speech device 8, and detects a communication error (such as a network disconnection) in communication between server device 6 and speech device 8. While a communication error is occurring in communication between server device 6 and speech device 8, communicator 30 cannot receive the sound source data from server device 6.

Storage 34 is a memory which stores the sound source data received by communicator 30 (the event notification sound source data, the contents notification sound source data, and the communication error notification sound source data). The communication error notification sound source data may be previously stored as internal sound source data in storage 34 when speech device 8 is shipped from a factory. The event notification sound source data, the contents notification sound source data, and the resetting notification sound source data may be discarded from storage 34 after being reproduced by reproducer 36.

Each time communicator 30 receives each of the event notification sound source data and the contents notification sound source data, reproducer 36 reads, from storage 34, the event notification sound source data or the contents notification sound source data which has been received, and reproduces it.

When a communication error is detected by detector 32, reproducer 36 measures a time elapsed after the detection of the communication error. Then, when the measured elapsed time reaches a predetermined period (for example, one hour) (that is, when a period during which the communication error has been detected by detector 32 reaches the predetermined period), reproducer 36 uses, as a trigger, an operation of speech device 8 performed by user 12 (for example, turning on of the power of speech device 8 by operating a remote controller) to reproduce the communication error notification sound source data previously stored in storage 34. When a communication error in communication between server device 6 and speech device 8 is eliminated, and thus no communication error is detected by detector 32, reproducer 36 resets the measured elapsed time.

When communicator 30 receives the resetting notification sound source data, reproducer 36 uses, as a trigger, an operation of speech device 8 performed by user 12 to read the received resetting notification sound source data from storage 34 and reproduce it.

Loudspeaker 38 emits a voice of the details of the notification indicated by the sound source data reproduced by reproducer 36.

### [3. Operation of notification system]

### [3-1. First operation of notification system]

The first operation of notification system 2 according to the embodiment will then be described with reference to FIGS. 3 and 4. FIG. 3 is a sequence diagram showing the flow of the first operation of notification system 2 according to the embodiment. FIG. 4 is a conceptual diagram for illustrating the first operation of notification system 2 according to the embodiment.

As shown in FIG. 3, communicator 30 of speech device 8 first connects to server device 6 via network 10 (S101).

Then, when the first connection to speech device 8 is detected via communicator 18, sound source data extractor 28 of server device 6 extracts the communication error notification sound source data from storage 24. Then, communicator 18 of server device 6 transmits, to speech device 8, the communication error notification sound source data extracted by sound source data extractor 28 (S102).

Then, communicator 30 of speech device 8 receives the communication error notification sound source data from server device 6 (S103), and stores the received communication error notification sound source data in storage 34 (S104).

Then, when an event occurs in information source device 4, communicator 16 of information source device 4 transmits an operation log indicating the event to server device 6 (S105).

Then, communicator 18 of server device 6 receives the operation log from information source device 4 (S106), and outputs the received operation log to acquirer 20. Acquirer 20 acquires the operation log received by communicator 18, and outputs the acquired operation log to sound source data extractor 28. Sound source data extractor 28 extracts, based on the operation log from acquirer 20, the event notification sound source data corresponding to the operation log from storage 24.

Then, communicator 18 of server device 6 transmits, to speech device 8, the event notification sound source data extracted by sound source data extractor 28 (S107).

Then, communicator 30 of speech device 8 receives the event notification sound source data from server device 6 (S108), and stores the received event notification sound source data in storage 34. Then, reproducer 36 of speech device 8 reads, from storage 34, the event notification sound source data received by communicator 30, and reproduces it (S109).

In a state where a communication error is not detected by detector 32 of speech device 8, steps S105 to S109 described above are repeatedly performed. In addition to steps S105 to S109 described above, communicator 18 of server device 6 may transmit the contents notification sound source data to speech device 8.

Thereafter, when detector 32 of speech device 8 detects a communication error (S110), reproducer 36 of speech device 8 measures a time elapsed after the communication error is detected by detector 32 (S111).

While detector 32 of speech device 8 is detecting a communication error, communicator 30 of speech device 8 cannot receive the sound source data (the event notification sound source data and the contents notification sound source data) from server device 6. Hence, as shown in part (a) in FIG. 4, reproducer 36 of speech device 8 does not reproduce the sound source data (the event notification sound source data and the contents notification sound source data) during this period.

Then, when the measured elapsed time reaches a predetermined period (for example, one hour) (S112), reproducer 36 uses, as a trigger, an operation of speech device 8 performed by user 12 (S113) to reproduce the communication error notification sound source data previously stored in storage 34 (S114). In this way, as shown in part (b) in FIG. 4, after speech device 8 has not reproduced the sound source data for the predetermined period, speech device 8 reproduces, for example, the communication error notification sound source data for the details of a speech which are "check the network connection status".

Consequently, based on a communication error in communication between server device 6 and speech device 8, user 12 is allowed to notice that speech device 8 is in a state where speech device 8 cannot reproduce the sound source data (the event notification sound source data and the contents notification sound source data).

### [3-2. Second operation of notification system]

The second operation of notification system 2 according to the embodiment will then be described with reference to FIGS. 5 and 6. FIG. 5 is a sequence diagram showing the flow of the second operation of notification system 2 according to the embodiment. FIG. 6 is a conceptual diagram for illustrating the second operation of notification system 2 according to the embodiment.

In the following description, it is assumed that after speech device 8 last reproduced the sound source data (for example, the event notification sound source data), user 12 has not selected any contents to be emitted by speech device 8 in the reproduction settings, and no event has occurred in information source device 4. Hence, as shown in part (a) in FIG. 6, in speech device 8, after the sound source data was last reproduced, a state where the sound source data (the event notification sound source data and the contents notification sound source data) is not reproduced has continued.

As shown in FIG. 5, identifier 26 of server device 6 references the speech performance information stored in storage 24 to identify, based on the details of the reproduction settings received by receiver 22 (for example, based on the fact that user 12 does not select any contents to be emitted by speech device 8 in the reproduction settings), speech device 8 in which reproducer 36 has not reproduced the sound source data for a predetermined period (for example, one month) (S201). Then, identifier 26 adds identified speech device 8 to a candidate list.

Then, sound source data extractor 28 of server device 6 extracts, from storage 24, for example, the resetting notification sound source data for the details of a speed which are "how about reviewing the settings from a setting screen?". Then, communicator 18 of server device 6 transmits the resetting notification sound source data extracted by sound source data extractor 28 to speech device 8 identified by identifier 26 (that is, speech device 8 added to the candidate list) (S202).

Then, communicator 30 of speech device 8 receives the resetting notification sound source data from server device 6 (S203), and stores the received resetting notification sound source data in storage 34.

Then, reproducer 36 of speech device 8 uses, as a trigger, an operation of speech device 8 performed by user 12 (S204) to read the resetting notification sound source data received by communicator 30 from storage 34 and reproduce it (S205). In this way, as shown in part (b) in FIG. 6, speech device 8 reproduces, for example, the resetting notification sound source data for the details of a speech which are "how about reviewing the settings from a setting screen?".

Consequently, based on the details of the reproduction settings made by user 12, user 12 is allowed to notice that speech device 8 is in a state where speech device 8 cannot reproduce the sound source data (the event notification sound source data and the contents notification sound source data).

Although in the present embodiment, the resetting notification sound source data is the sound source data for the details of a speech which are "how about reviewing the settings from a setting screen?", the present disclosure is not limited to the sound source data described above, and the sound source data may be sound source data which indicates a voice (for example, a yawn, a sneeze, or a quiz) emitted by speech device 8 that is anthropomorphized.

### [4. Effects]

Notification system 2 according to a first aspect of the present disclosure includes: speech device 8 which is operated by user 12; and server device 6 which communicates with speech device 8 via network 10. Server device 6 includes communicator 18 which transmits sound source data to speech device 8. Speech device 8 includes communicator 30 which receives the sound source data from server device 6 and reproducer 36 which reproduces the sound source data received by communicator 30. When reproducer 36 of speech device 8 has not reproduced the sound source data for a predetermined period, reproducer 36 reproduces specific sound source data for notifying user 12 of predetermined information with an operation of speech device 8 performed by user 12 as a trigger.

In this way, when reproducer 36 of speech device 8 has not reproduced the sound source data for the predetermined period, reproducer 36 can reproduce the specific sound source data for notifying user 12 of the predetermined information with timing at which user 12 is located close to speech device 8. Consequently, user 12 is allowed to notice that speech device 8 is in a state where speech device 8 cannot reproduce the sound source data.

In notification system 2 according to a second aspect of the present disclosure, in the first aspect, speech device 8 further includes: detector 32 which detects a communication error in communication between speech device 8 and server device 6; and storage 34 which stores the specific sound source data for notifying user 12 of occurrence of the communication error. (i) When detector 32 has not detected the communication error, reproducer 36 of speech device 8 reproduces the sound source data each time communicator 30 receives the sound source data, and (ii) when detector 32 has detected the communication error, after a period during which the communication error has been detected reaches the predetermined period, reproducer 36 of speech device 8 reproduces the specific sound source data previously stored in storage 34 with an operation of speech device 8 performed by user 12 as a trigger.

In this way, based on a communication error in communication between server device 6 and speech device 8, user 12 is allowed to notice that speech device 8 is in a state where speech device 8 cannot reproduce the sound source data.

In notification system 2 according to a third aspect of the present disclosure, in the second aspect, communicator 18 of server device 6 transmits the specific sound source data to speech device 8 when speech device 8 and server device 6 are first connected to each other. Communicator 30 of speech device 8 receives the specific sound source data from server device 6. Storage 34 of speech device 8 stores the specific sound source data received by communicator 30.

In this way, even when speech device 8 cannot receive the sound source data from server device 6 due to a communication error, it is possible to reliably reproduce the specific sound source data previously stored in storage 34.

In notification system 2 according to a fourth aspect of the present disclosure, in any one of the first to third aspects, server device 6 further includes receiver 22 which receives a setting, set by user 12, about reproduction of the sound source data and identifier 26 which identifies, based on the setting, speech device 8 which has not reproduced the sound source data for the predetermined period. When speech device 8 is identified by identifier 26, communicator 18 of server device 6 transmits, to speech device 8 identified by identifier 26, the specific sound source data for providing a notification that prompts user 12 to review the setting. Communicator 30 of speech device 8 receives the specific sound source data from server device 6. Reproducer 36 of speech device 8 reproduces the specific sound source data received by communicator 30.

In this way, based on the reproduction setting made by user 12, user 12 is allowed to notice that speech device 8 is in a state where speech device 8 cannot reproduce the sound source data.

In notification system 2 according to a fifth aspect of the present disclosure, in the fourth aspect, the specific sound source data is sound source data which indicates a voice emitted by speech device 8 which is anthropomorphized.

In this way, it is possible to reduce the feeling of annoyance of user 12 when user 12 hears the reproduced specific sound source data.

A notification method according to a sixth aspect of the present disclosure is a notification method performed by notification system 2 that includes speech device 8 which is operated by user 12 and server device 6 which communicates with speech device 8 via network 10, and the notification method includes: (a) transmitting, by server device 6, sound source data to speech device 8; (b) receiving, by speech device 8, the sound source data from server device 6; (c) reproducing, by speech device 8, the sound source data received in the receiving in (b); and (d) reproducing, by speech device 8, specific sound source data for notifying user 12 of predetermined information with an operation of speech device 8 performed by user 12 as a trigger when speech device 8 has not reproduced the sound source data for a predetermined period.

In this way, when speech device 8 has not reproduced the sound source data for the predetermined period, speech device 8 can reproduce the specific sound source data for notifying user 12 of the predetermined information with timing at which user 12 is located close to speech device 8. Consequently, user 12 is allowed to notice that speech device 8 is in a state where speech device 8 cannot reproduce the sound source data.

Server device 6 according to a seventh aspect of the present disclosure is a server device that communicates, via network 10, with speech device 8 operated by user 12. Server device 6 includes: communicator 18 that transmits sound source data to speech device 8; storage 24 that stores the sound source data and speech performance information which indicates performance of reproduction of the sound source data in speech device 8; and identifier 26 that identifies, based on the speech performance information stored in storage 24, speech device 8 which has not reproduced the sound source data for a predetermined period. Communicator 18 transmits specific sound source data for notifying user 12 of predetermined information to speech device 8 identified by identifier 26.

In this way, user 12 is likewise allowed to notice that speech device 8 is in a state where speech device 8 cannot reproduce the sound source data.

Speech device 8 according to an eighth aspect of the present disclosure is a speech device that is operated by user 12 and communicates with server device 6 via network 10. Speech device 8 includes: communicator 30 that receives sound source data from server device 6; and reproducer 36 that reproduces the sound source data received by communicator 30. When reproducer 36 has not reproduced the sound source data for a predetermined period, reproducer 36 reproduces specific sound source data for notifying user 12 of predetermined information with an operation of speech device 8 performed by user 12 as a trigger.

In this way, user 12 is likewise allowed to notice that speech device 8 is in a state where speech device 8 cannot reproduce the sound source data.

### (Variations and like)

As described above, the embodiment has been described as an example of the technique disclosed in the present application. However, the technique disclosed in the present disclosure is not limited to the technique described above, and the present disclosure can be applied to embodiments obtained by performing changes, replacements, additions, omissions and the like as necessary. Embodiments can be newly provided by combining constituent elements described in the above embodiment.

Hence, other embodiments will be described as examples below.

Although in the embodiment described above, when reproducer 36 of speech device 8 has not reproduced the sound source data for the predetermined period, reproducer 36 uses, as a trigger, an operation of speech device 8 performed by user 12 to reproduce the communication error notification sound source data or the resetting notification sound source data, the present disclosure is not limited to this configuration. For example, when reproducer 36 of speech device 8 has not reproduced the sound source data for the predetermined period, reproducer 36 may use, as a trigger, detection of an approach to speech device 8 made by user 12 using a human sensor disposed in speech device 8 to reproduce the communication error notification sound source data or the resetting notification sound source data.

Although in the embodiment described above, information source device 4 and speech device 8 are separate devices, the present disclosure is not limited to this configuration, and information source device 4 and speech device 8 may be the same device.

In the embodiment described above, the constituent elements may be formed by dedicated hardware or may be realized by executing software programs suitable for the constituent elements. A program executor such as a CPU or a processor may read and execute software programs recorded in a non-transitory recording medium such as a hard disk or a semiconductor memory to realize the constituent elements.

A processor such as a CPU may execute programs to realize a part or all of the functions of notification system 2 according to the embodiment described above.

As described above, the embodiment has been described as an example of the technique in the present disclosure. Hence, the accompanying drawings and the detailed description are provided.

Thus, constituent elements provided in the accompanying drawings and the detailed description may include not only constituent elements necessary for solving the issue but also constituent elements which are not necessary for solving the issue in order to illustrate the technique. Therefore, just because the constituent elements which are not necessary are provided in the accompanying drawings and the detailed description, it should not be immediately determined that the constituent elements which are not necessary are necessary.

Since the embodiment described above is intended to illustrate the technique in the present disclosure, various changes, replacements, additions, omissions and the like can be performed in the scope of claims or a scope equivalent thereto.

### [Industrial Applicability]

The present disclosure can be applied as a notification system or the like in which, for example, each time an event occurs in an information source device, a speech device uses a voice to notify a user of the occurrence of the event.

### [Reference Signs List]

- 2: notification system
- 4: information source device
- 5: external information source
- 6: server device
- 8: speech device
- 10: network
- 12: user
- 14: home
- 16, 18, 30: communicator
- 20: acquirer
- 22: receiver
- 24, 34: storage
- 26: identifier
- 28: sound source data extractor
- 32: detector
- 36: reproducer
- 38: loudspeaker

## Claims

1. A notification system comprising:
a device that is operated by a user; and
a server device that communicates with the device via a network,
wherein the server device includes a first communicator that transmits sound source data to the device,
the device includes:
a second communicator that receives the sound source data from the server device; and
a reproducer that reproduces the sound source data received by the second communicator, and
when the reproducer of the device has not reproduced the sound source data for a predetermined period, the reproducer reproduces specific sound source data for notifying the user of predetermined information with an operation of the device performed by the user or an approach to the device made by the user as a trigger.

2. The notification system according to claim 1,
wherein the device further includes:
a detector that detects a communication error in communication between the device and the server device; and
a storage that stores the specific sound source data for notifying the user of occurrence of the communication error,
(i) when the detector has not detected the communication error, the reproducer of the device reproduces the sound source data each time the second communicator receives the sound source data, and
(ii) when the detector has detected the communication error, after a period during which the communication error has been detected reaches the predetermined period, the reproducer of the device reproduces the specific sound source data previously stored in the storage with the operation of the device performed by the user or the approach to the device made by the user as a trigger.

3. The notification system according to claim 2,
wherein the first communicator of the server device transmits the specific sound source data to the device when the device and the server device are first connected to each other,
the second communicator of the device receives the specific sound source data from the server device, and
the storage of the device stores the specific sound source data received by the second communicator.

4. The notification system according to claim 1,
wherein the server device further includes:
a receiver that receives a setting, set by the user, about reproduction of the sound source data; and
an identifier that identifies, based on the setting, the device that has not reproduced the sound source data for the predetermined period,
when the device is identified by the identifier, the first communicator of the server device transmits, to the device identified by the identifier, the specific sound source data for providing a notification that prompts the user to review the setting,
the second communicator of the device receives the specific sound source data from the server device, and
the reproducer of the device reproduces the specific sound source data received by the second communicator.

5. The notification system according to claim 4,
wherein the specific sound source data is sound source data that indicates a voice emitted by the device that is anthropomorphized.

6. A notification method performed by a notification system that includes a device which is operated by a user and a server device which communicates with the device via a network, the notification method comprising:
(a) transmitting, by the server device, sound source data to the device;
(b) receiving, by the device, the sound source data from the server device;
(c) reproducing, by the device, the sound source data received in the receiving in (b); and
(d) reproducing, by the device, specific sound source data for notifying the user of predetermined information with an operation of the device performed by the user or an approach to the device made by the user as a trigger when the device has not reproduced the sound source data for a predetermined period.

7. A server device that communicates, via a network, with a device operated by a user, the server device comprising:
a communicator that transmits sound source data to the device;
a storage that stores the sound source data and speech performance information which indicates performance of reproduction of the sound source data in the device; and
an identifier that identifies, based on the speech performance information stored in the storage, the device that has not reproduced the sound source data for a predetermined period,
wherein the communicator transmits specific sound source data for notifying the user of predetermined information to the device identified by the identifier.

8. A device that is operated by a user and communicates with a server device via a network, the device comprising:
a communicator that receives sound source data from the server device; and
a reproducer that reproduces the sound source data received by the communicator,
wherein when the reproducer has not reproduced the sound source data for a predetermined period, the reproducer reproduces specific sound source data for notifying the user of predetermined information with an operation of the device performed by the user or an approach to the device made by the user as a trigger.
